# EUROPÄISCHE PATENTANMELDUNG

(11) **EP 2 249 474 A1**
(43) Veröffentlichungstag der Anmeldung: **10.11.2010**
(21) Anmeldenummer: 09159559.5
(22) Anmeldetag: 06.05.2009
(51) Int. Cl.: H02P 9/10, F01D 15/10, H02J 3/26, H02J 3/24

(54) **Verfahren zum Unterdrücken von Störungen aus einem Verbrauchernetz in einer Kraftwerksanlage**

(71) Anmelder: Siemens Aktiengesellschaft, 80333 München (DE)
(72) Erfinder: Beul, Ulrich, 45219, Essen (DE); Gottschalk, Hanno, 44789, Bochum (DE); Hegger, Daniel, 40479, Düsseldorf (DE); Lehmann, Christoph, 47506, Neukirchen-Vluyn (DE); Richter, Christoph Hermann, 49477, Ibbenbüren (DE)

(57) **Zusammenfassung**

Die Erfindung betrifft eine Kraftwerksanlage, umfassend einen Generator (1) für ein Drei-Phasen-Wechselstromsystem mit Generatorklemmen (18,19,20) für jede Phase (2,3,4), wobei ein Stromversorgungsgerät (15) mit den Generatorklemmen (18,19,20) verbunden ist. Die Erfindung betrifft ferner ein Verfahren zum Betrieb eines Generators (1) für ein Drei-Phasen-Wechselstromsystem, dessen elektrische Leistung in ein Verbrauchernetz eingespeist wird, wobei der Generator (1) einen Rotor aufweist, wobei zur Vermeidung von Torsionsschwingungen des Rotors infolge von Störungen aus dem Verbrauchernetz, Strom in einzelne Phasen (2,3,4) des Generators (1) gespeist wird.

## Beschreibung

Die Erfindung betrifft ein Verfahren zum Unterdrücken von kontinuierlichen und transienten Störungen aus einem Verbrauchernetz, insbesondere die Reduzierung der Torsionsbewegungen des Wellenstranges unmittelbar am Generator. Die Erfindung betrifft ferner eine Kraftwerksanlage mit einer Vorrichtung zur Unterdrückung solcher Störungen.

Generatoren, also Geräte, die aus Bewegungsenergie elektrische Energie erzeugen, sind im Stand der Technik allgemein bekannt. Ein an der Generatorwelle anliegendes Drehmoment dreht im Inneren des Generators eine Spule in einem Magnetfeld, das durch das dynamoelektrische Prinzip erregt werden kann, und erzeugt durch Induktion elektrische Spannung. Ist ein Verbraucher an den Generator angeschlossen, so fließt ein elektrischer Strom.

Großtechnische Generatoren umfassen im Wesentlichen einen Stator und einen Rotor. Über seine Welle wird dem Rotor mechanische Leistung zugeführt, beispielsweise von einer Turbine oder von einem Verbrennungsmotor, wodurch der Rotor auf Betriebsdrehzahl gehalten wird und sich innerhalb des Stators dreht, wodurch in jeder Phase der dreipoligen Statorwicklung durch Induktion eine Wechselspannung erzeugt wird. Durch den Versatz der Statorspulen um jeweils 120° wird ein entsprechender dreiphasiger Drehstrom erzeugt.

Gerade im Bereich der Mittel- und Großmaschinen für ein öffentliches Energieversorgungsnetz, also insbesondere bei Turbogeneratoren, wird die Mechanik während des bestimmungsgemäßen Betriebs wie beispielsweise im Fall schneller Leistungsänderungen, durch elektromagnetische und mechanische Kräfte zu Schwingungen mit zum Teil großen Amplituden angeregt. Dies führt zu einer mechanisch übermäßigen Beanspruchung, die bis zum Defekt einzelner Komponenten führen kann. Kontinuierliche und transiente Störungen aus dem elektrischen Netz fachen über den Generator den Rotorstrang zu Torsionsschwingungen an. Die auftretenden Schwingungen können zu Materialermüdung in vielen Komponenten des Stranges führen. Insbesondere können diese Schwingungen Schäden an der Beschaufelung hervorrufen. Hierbei spielen die großen Niederdruck-Schaufeln eine wesentliche Rolle, da sie die Eigenfrequenzen und -formen maßgeblich beeinflussen und die Schwingungen des Strangs dämpfen können.

Üblicherweise wird das Problem der Torsionsschwingungen durch Abstimmung der Frequenzen gelöst, so dass ein Nenndrehzahlbereich mit maximaler Sicherheit entsteht. Dabei ist es häufig nicht ohne erheblichen Aufwand möglich, den gesamten geforderten Bereich resonanzfrei zu halten.

Aufgabe der Erfindung ist daher die Angabe eines Verfahrens und einer Vorrichtung zum Unterdrücken von kontinuierlichen und transienten Störungen aus einem Verbrauchernetz, insbesondere zur Reduzierung der Torsionsbewegungen des Wellenstranges.

Erfindungsgemäß wird die auf die Vorrichtung gerichtete Aufgabe gelöst durch eine Kraftwerksanlage, umfassend einen Generator für ein Drei-Phasen-Wechselstromsystem mit Generatorklemmen für jede Phase, wobei ein Stromversorgungsgerät mit den Generatorklemmen verbunden ist.

Die Erfindung beruht auf dem Gedanken, an den Generatorklemmen geeignete Ströme so einzuspeisen, dass der für die Anfachung der Torsionsschwingungen bei kontinuierlichen und transienten Störungen aus dem elektrischen Netz verantwortliche zeitlich periodische Generatormomentenverlauf in seiner Amplitude minimal wird. Dieser zeitlich periodische Generatormomentenverlauf liegt dann vorwiegend vor, wenn das den Generator belastende Drehstromsystem unsymmetrisch wird. Vorteilhafterweise ist das Stromversorgungsgerät mit einem Analysator für die Aufteilung des Drei-Phasen-Wechselstromsystems in Mitsystem, Gegensystem und Nullsystem verbunden. Das Mitsystem besitzt die gleiche Umlaufrichtung wie das tatsächliche System. Das Gegensystem hat eine gegenläufige Richtung zum tatsächlichen System und gleicht die Abweichung der Phasoren, also der Zeiger bzw. komplexen Amplituden der zeitabhängigen Funktionen der Amplituden und der Phasen φ, von der üblichen 120°-Phasenverschiebung aus. Das Nullsystem gleicht die "Nicht-Addition" des tatsächlichen Systems zu null aus. Die Zerlegung des tatsächlichen Systems in symmetrische Komponenten vereinfacht die Analyse unbalancierter Zustände, d.h. unterschiedlicher Lastverteilungen auf den Phasen, im System.

Dabei ist es zweckmäßig, wenn der Analysator mit den Phasen des Generators einzeln verbunden ist.

In einer vorteilhaften Ausführungsform der Erfindung ist das Stromversorgungsgerät mit einem speisenden Netz verbunden.

In einer alternativen oder ergänzenden Ausführungsform ist das Stromversorgungsgerät mit einem Energiespeicher verbunden. Dies ist besonders vorteilhaft, wenn bei Netzstörungen die Versorgung über das speisende Netz nicht sicher gestellt ist.

Dabei ist kann es zweckmäßig sein, wenn der Energiespeicher eine Kondensatorbatterie ist.

In einer alternativen Ausgestaltung der Erfindung ist der Energiespeicher eine rotierende Masse, deren Vorteil darin liegt, dass bei Leistungsänderungen eine schnelle Ausregelung erfolgen kann.

In einer weiteren alternativen Ausgestaltung umfasst der Energiespeicher supraleitende Spulen. Der Vorteil einer Energiespeicherung in supraleitenden Spulen liegt wiederum in den schnellen Zugriffszeiten. Die Speicherung der Ausregelenergie im Magnetfeld der Spulen kann in das Versorgungssystem mittels Wechselrichter eingespeist werden.

Im erfinderischen Verfahren zum Betrieb eines Generators für ein Drei-Phasen-Wechselstromsystem, dessen elektrische Leistung in ein Verbrauchernetz eingespeist wird, wobei der Generator einen Rotor aufweist, wird zur Vermeidung von Torsionsschwingungen des Rotors infolge von Störungen aus dem Verbrauchernetz, Strom in einzelne Phasen des Generators gespeist.

Vorteilhafterweise erfolgt die Stromzufuhr geregelt.

Zweckmäßigerweise werden für jede Phase geeignete Ströme so eingespeist, dass ein Gegensystem und ein Nullsystem im Generatorstrom verschwinden oder möglichst klein werden.

Dabei ist es vorteilhaft, wenn der hierfür benötigte Strom aus einem eigens hierfür vorgesehenen Stromversorgungsgerät eingespeist wird.

Zweckmäßigerweise wird der Strom über Generatorklemmen in den Generator gespeist.

Vorteilhafterweise erzeugt das Stromversorgungsgerät aus einem speisenden Netz geeignete Ströme.

In einer alternativen Ausgestaltung der Erfindung erzeugt das Stromversorgungsgerät geeignete Ströme aus einem Energiespeicher.

Durch das erfinderische Verfahren und die erfinderische Vorrichtung werden die Schwingungsamplituden in den Strangkomponenten minimiert und damit die Lebensdauer erhöht. Der grundsätzlich bestehenden Notwendigkeit einer schnellen Reaktion auf ungewollte Änderungen der Netzzustandsgrößen wird Rechnung getragen. Schnelle Reaktionen können nur mit Systemen erfolgen, die geringe Zugriffszeiten zur Energiebereitstellung erfüllen. Existierende Energiespeichersysteme zur Stützung des elektrischen Netzes durch sehr schnelle (typ. 20 ms) Einspeisung sind aber im Netz angeordnet. Eine generatornahe Lösung senkt die Materialbeanspruchung der Beschaufelung und des Rotors. Der Einsatz der Systeme unmittelbar an den Generatorklemmen bekämpft die Schwingungen in ihrer Ursache.

Die Erfindung wird beispielhaft anhand der Zeichnungen näher erläutert. Es zeigen schematisch und nicht maßstäblich:
Figur Einspeisung von Strömen an den Generatorklemmen zur Kompensation des Gegen- und Nullsystems eines Drei-Phasen-Wechselstromsystems.

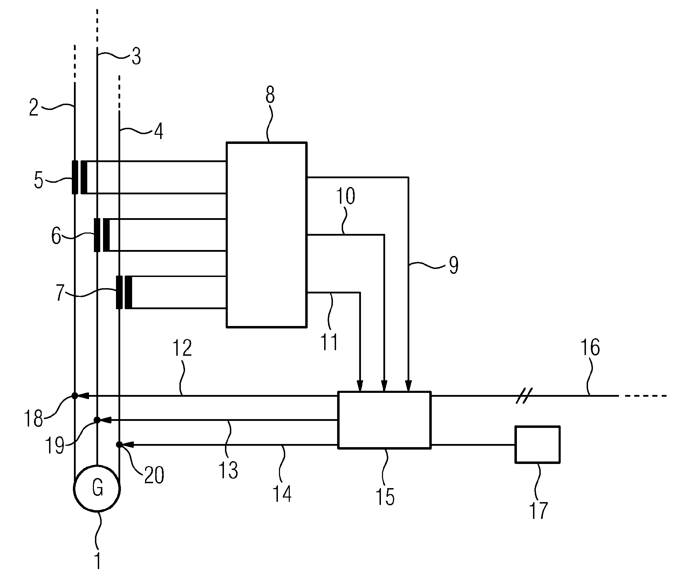

Die Figur zeigt schematisch und beispielhaft die erfinderische Vorrichtung zur Kompensation von Störungen aus einem Verbrauchernetz. Der Generator 1 umfasst, was in der Zeichnung nicht näher dargestellt ist, einen massiven feststehenden Teil, den Stator, der im Prinzip eine große Induktionsspule mit Eisenkern darstellt, und einen auf einer Rotorwelle gehaltenen Rotor. Dem Rotor wird über einen ebenfalls nicht dargestellten Motor oder eine Turbomaschine mechanische Leistung zugeführt, wodurch der innerhalb des Stators vorgesehene Rotor auf eine vorbestimmte Betriebsdrehzahl gebracht wird. Der Generator 1 ist als Asynchrongenerator ausgebildet und umfasst einen Käfigläufer. In jeder Phase der dreipoligen Statorwicklung wird durch Induktion eine Wechselspannung erzeugt. Durch den Versatz der Statorspulen um jeweils 120° wird durch den sich in dem Stator drehenden Rotor ein dreiphasiger Drehstrom erzeugt. Die drei Phasen sind in der Figur durch die Linien 2, 3 und 4 angedeutet.

An jeder der drei Phasen 2, 3, 4 ist ein Phasenmonitor 5, 6, 7 angebracht, um den jeder Phase entsprechenden Phasor, d.h. Amplitude und Phase φ, zu bestimmen. Das damit bestimmte, unsymmetrische Drehstromsystem kann in einem Phasoren-Analysator 8 in drei symmetrische Komponenten zerlegt werden: das Mitsystem 9, das Gegensystem 10 und das Nullsystem 11. Würde das Drehstromsystem nur aus dem Mitsystem 9 bestehen, würde die Amplitude des zeitlich periodischen Generatormomentenverlaufes minimal.

Es werden daher für jede Phase 2, 3, 4 geeignete Ströme 12, 13, 14 so eingespeist, dass das Gegensystem 10 und das Nullsystem 11 im Generatorstrom verschwinden oder möglichst klein werden.

Die Einspeisung der Ströme 12, 13, 14 erfolgt aus einem eigens dafür vorgesehenen Stromversorgungsgerät 15, in dem die Ströme 12, 13, 14 durch geeignete Thyristorschaltungen aus dem speisenden Netz 16 oder bei Netzstörungen aus einem Energiespeicher 17, wie z.B. einer Kondensatorbatterie oder einem rotierenden Energiespeicher, erzeugt werden.

Den rotierenden Energiespeicher muss man sich als rotierende Masse an einer elektrischen Maschine vorstellen, die sowohl als Motor als auch als Generator arbeiten kann. Damit ist es möglich im Motorbetrieb Energie dem rotierenden Energiespeicher zuzuführen und im Generatorbetrieb Energie aus dem rotierenden Energiespeicher zu entnehmen.

Die Einspeisung der Ströme 12, 13, 14 in den einzelnen Phasen 2, 3, 4 kann dann je nach Phasenlage zum Zuführung oder zur Entnahme von Energie an den Turbo-Generator-Klemmen 18, 19, 20 führen.

## Patentansprüche

1. Eine Kraftwerksanlage, umfassend einen Generator (1) für ein Drei-Phasen-Wechselstromsystem mit Generatorklemmen (18,19,20) für jede Phase (2,3,4), **dadurch gekennzeichnet, dass** ein Stromversorgungsgerät (15) mit den Generatorklemmen (18,19,20) verbunden ist.

2. Die Kraftwerksanlage nach Anspruch 1, wobei das Stromversorgungsgerät (15) mit einem Analysator (8) für die Aufteilung des Drei-Phasen-Wechselstromsystems in Mitsystem (9), Gegensystem (10) und Nullsystem (11) verbunden ist.

3. Die Kraftwerksanlage nach Anspruch 2, wobei der Analysator (8) mit den Phasen (2,3,4) des Generators (1) einzeln verbunden ist.

4. Die Kraftwerksanlage nach einem der vohergehenden Ansprüche, wobei das Stromversorgungsgerät (15) mit einem speisenden Netz (16) verbunden ist.

5. Die Kraftwerksanlage nach einem der vohergehenden Ansprüche, wobei das Stromversorgungsgerät (15) mit einem Energiespeicher (17) verbunden ist.

6. Die Kraftwerksanlage nach Anspruch 5, wobei der Energiespeicher (17) eine Kondensatorbatterie ist.

7. Die Kraftwerksanlage nach Anspruch 5, wobei der Energiespeicher (17) eine rotierende Masse ist.

8. Die Kraftwerksanlage nach Anspruch 5, wobei der Energiespeicher (17) supraleitende Spulen umfasst.

9. Ein Verfahren zum Betrieb eines Generators (1) für ein Drei-Phasen-Wechselstromsystem, dessen elektrische Leistung in ein Verbrauchernetz eingespeist wird, wobei der Generator (1) einen Rotor aufweist, **dadurch gekennzeichnet, dass** zur Vermeidung von Torsionsschwingungen des Rotors infolge von Störungen aus dem Verbrauchernetz, Strom in einzelne Phasen (2,3,4) des Generators (1) gespeist wird.

10. Das Verfahren nach Anspruch 9, wobei die Stromzufuhr geregelt erfolgt.

11. Das Verfahren nach einem der Ansprüche 9 oder 10, wobei für jede Phase (2,3,4) geeignete Ströme (12,13,14) so eingespeist werden, dass ein Gegensystem (10) und ein Nullsystem (11) im Generatorstrom verschwinden oder möglichst klein werden.

12. Das Verfahren nach einem der Ansprüche 9 bis 11, wobei Strom aus einem eigens hierfür vorgesehenen Stromversorgungsgerät (15) eingespeist wird.

13. Das Verfahren nach einem der Ansprüche 9 bis 12, wobei Strom über Generatorklemmen (18,19,20) in den Generator (1) gespeist wird.

14. Das Verfahren nach einem der Ansprüche 12 oder 13, wobei das Stromversorgungsgerät (15) aus einem speisenden Netz (16) geeignete Ströme (12,13,14) erzeugt.

15. Das Verfahren nach einem der Ansprüche 12 oder 13, wobei das Stromversorgungsgerät (15) aus einem Energiespeicher (17) geeignete Ströme erzeugt.
